# EUROPEAN PATENT SPECIFICATION

(11) **EP 3 892 949 B1**
(45) Date of publication and mention of the grant of the patent: **25.03.2026**
(21) Application number: 20218011.3
(22) Date of filing: 31.12.2020
(51) Int. Cl.: F28F 1/04, F28F 1/14, F28F 1/22, F02C 7/14, F28D 1/053, F28D 21/00, F02K 3/04, F28F 3/12, F28F 27/02

(54) **AIRCRAFT HEAT EXCHANGERS AND PLATES**
WÄRMETAUSCHER UND -PLATTEN FÜR FLUGZEUGE
ÉCHANGEURS ET PLAQUES DE CHALEUR D'AÉRONEF

(30) Priority: 03.01.2020 US 202062957091 P; 19.01.2020 US 202062963070 P
(43) Date of publication of application: 13.10.2021
(73) Proprietor: RTX Corporation, Farmington, CT 06032 (US)
(72) Inventor: BERGMAN, Russell J., South Windsor, CT Connecticut 06074 (US); BLICKENSTAFF, William D., Port Saint Lucie, FL Florida 34953 (US); WIEDENHOEFER, James F., Windsor, CT Connecticut 06095 (US); VIRKLER, Scott D., Ellington, CT Connecticut 06029 (US); LILES, Jason D., Port Saint Lucie, FL Florida 34987 (US)
(74) Representative: Dehns

(56) References cited:
- US-A1- 2001 018 024
- US-A1- 2016 230 669
- US-A1- 2018 245 853
- US-B1- 6 430 931
- US-B2- 10 316 750

## Description

### BACKGROUND

The disclosure relates to gas turbine engine heat exchangers. More particularly, the disclosure relates to air-to-air heat exchangers.

Examples of gas turbine engine heat exchangers are found in: United States Patent Application Publication 20190170445A1 (the '445 publication), McCaffrey, June 6, 2019, "HIGH TEMPERATURE PLATE FIN HEAT EXCHANGER"; United States Patent Application Publication 20190170455A1 (the '455 publication), McCaffrey, June 6, 2019, "HEAT EXCHANGER BELL MOUTH INLET"; and United States Patent Application Publication 20190212074A1 (the '074 publication), Lockwood et al., July 11, 2019, "METHOD FOR MANUFACTURING A CURVED HEAT EXCHANGER USING WEDGE SHAPED SEGMENTS",

An exemplary positioning of such a heat exchanger provides for the transfer of thermal energy from a flow (heat donor flow) diverted from an engine core flow to a bypass flow (heat recipient flow). For example, air is often diverted from the compressor for purposes such as cooling. However, the act of compression heats the air and reduces its cooling effectiveness. Accordingly, the diverted air may be cooled in the heat exchanger to render it more suitable for cooling or other purposes. One particular example draws the heat donor airflow from a diffuser case downstream of the last compressor stage upstream of the combustor. This donor flow transfers heat to a recipient flow which is a portion of the bypass flow. To this end, the heat exchanger may be positioned within a fan duct or other bypass duct. The cooled donor flow is then returned to the engine core (e.g., radially inward through struts) to pass radially inward of the gas path and then be passed rearward for turbine section cooling including the cooling of turbine blades and vanes. The heat exchanger may conform to the bypass duct. The bypass duct is generally annular. Thus, the heat exchanger may occupy a sector of the annulus up to the full annulus.

Other heat exchangers may carry different fluids and be in different locations. For example, instead of rejecting heat to an air flow in a bypass duct, other heat exchangers may absorb heat from a core flow (e.g., as in recuperator use). Among further uses for heat exchangers in aircraft are power and thermal management systems (PTMS) also known as integrated power packages (IPP). One example is disclosed in United States Patent Application publication 20100170262A1, Kaslusky et al., July 8, 2010, "AIRCRAFT POWER AND THERMAL MANAGEMENT SYSTEM WITH ELECTRIC CO-GENERATION". Another example is disclosed in United States Patent Application publication 20160362999A1, Ho, December 15, 2016, "EFFICIENT POWER AND THERMAL MANAGEMENT SYSTEM FOR HIGH PERFORMANCE AIRCRAFT". Another example is disclosed in United States Patent Application publication 20160177828A1, Snyder et al., June 23, 2016, "STAGED HEAT EXCHANGERS FOR MULTI-BYPASS STREAM GAS TURBINE ENGINES".

United States Patent 10,100,740 (the '740 patent, the disclosure of which is incorporated by reference in its entirety herein as if set forth at length), to Thomas, October 16, 2018, "Curved plate/fin heater exchanger", shows attachment of a square wave form fin array to the side of a heat exchanger plate body. For plates in a radial array, the wave amplitude progressively increases to accommodate a similar increase in inter-plate spacing.

US 6 430 931 B1 discloses a gas turbine in-line intercooler.

US 2001/018024 A1 discloses a gas turbine blade.

### SUMMARY

One aspect of the invention involves a plate of a heat exchanger of a gas turbine according to claim 1, a heat exchanger according to claim 7 and a method for using a heat exchanger according to claim 12.

The dependent claims disclose further embodiments falling under the scope of the claimed invention.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a schematic view of a heat exchanger.
FIG. 2 is an axial side schematic view of the heat exchanger of FIG. 1.
FIG. 3 is a schematic partial front view of the heat exchanger.
FIG. 4 is a view of a substrate of a plate of the heat exchanger.
FIG. 5 is a transverse sectional view of the plate of the heat exchanger taken along line 5-5 in FIG. 4.
FIG. 5A is an enlarged view of a distal edge portion of the plate.
FIG. 6 is a longitudinal sectional view of the plate taken along line 6-6 in FIG. 4.
FIG. 7 is a transverse sectional view of a first alternative plate of the heat exchanger. FIG. 7A is an enlarged view of a distal edge portion of the first alternative plate.
FIG. 8 is a view of a substrate of a plate of a second alternative plate.
FIG. 9 is a transverse sectional view of the second alternative plate taken along line 9-9.
FIG. 9A is an enlarged view of a proximal edge portion of the second alternative plate.
FIG. 10 is a longitudinal sectional view of the second alternative plate taken along line 10-10 in FIG. 8.
FIG. 11 is an enlarged view of a proximal edge portion of a third alternative plate.
FIG. 12 is a schematic axial half section view of a gas turbine engine including the heat exchanger.

Like reference numbers and designations in the various drawings indicate like elements.

### DETAILED DESCRIPTION

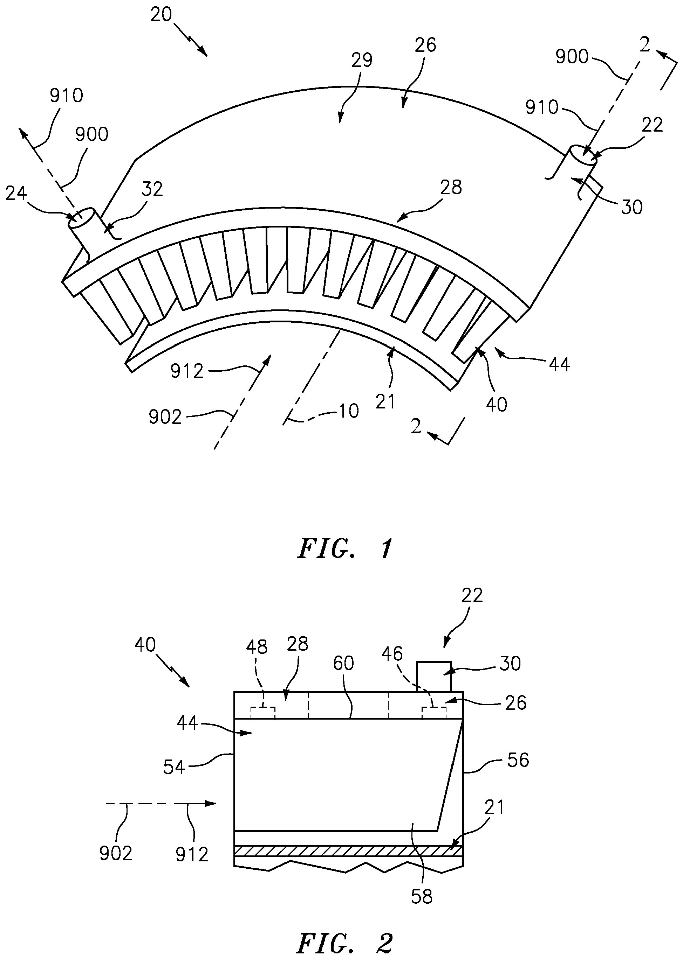

FIG. 1 shows a gas turbine engine heat exchanger 20 providing heat exchange between a first flowpath 900 and a second flowpath 902 and thus between their respective first and second fluid flows 910 and 912. In the exemplary embodiment, the flowpaths 900, 902 are gas flowpaths passing respective gas flows 910, 912. In the illustrated example, the first flow 910 enters the heat exchanger 20 as a single piped flow and exits as a single piped flow 910; whereas the flow 912 is sector portion of an axial annular flow surrounding a central longitudinal axis (centerline) 10 of the heat exchanger 20 and associated engine. For purposes of schematic illustration, the exemplary heat exchanger 20 is shown shaped to occupy essentially one quarter of a 360° annulus surrounding an inner member 21 such as an engine core. There may be multiple such heat exchangers occupying the full annulus or one or more such heat exchangers occupying only a portion of the annulus.

Other connections are also possible. For example, a configuration with a single first flow inlet and branched first flow outlets is shown in copending US Patent Application No. 62957091 (the '091 application), filed January 3, 2020, and entitled "Aircraft Heat Exchanger Assembly", the disclosure of which is incorporated by reference herein in its entirety as if set forth at length.

The heat exchanger 20 has an inlet 22 and outlet 24 for the first flow 910. The exemplary inlet 22 and outlet 24 are, respectively, ports of an inlet manifold 26 (FIG. 2) and an outlet manifold 28 (discussed below) formed as portions of a single combined manifold unit 29 in the example. Exemplary manifolds 26, 28 are metallic (e.g., nickel-based superalloy). The inlet manifold 26 and outlet manifold 28 may each have a respective fitting 30, 32 providing the associated port 22, 24. As is discussed further below, the inlet manifold 26 and outlet manifold 28 are coupled to heat exchanger plates 44 of one or more exemplary plate banks 40.

Each plate bank 40 comprises a circumferential array of plates 44 (discussed further below). In the exemplary banks 40, the plates 44 extend axially and radially relative to the axis 10. Thus, the plates 44 diverge from each other in the outward radial direction. Each plate 44 has an inlet port 46 and an outlet port 48. Exemplary ports 46, 48 are mated to sockets in an inner diameter (ID) wall portion of the respective manifold. Each plate 44 has one or more internal passageways between the ports 46 and 48.

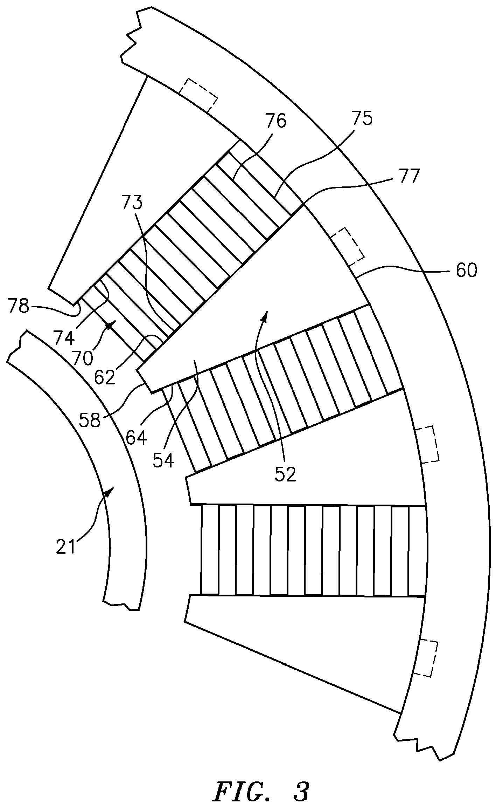

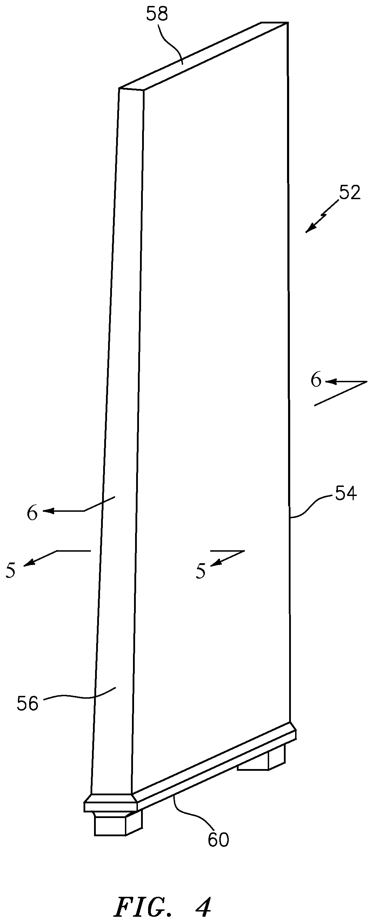

Each plate 44 comprises a body or substrate 52 (FIG. 4 - e.g., cast or additively manufactured alloy such as nickel-based superalloy) having a leading edge 54 (FIG. 2), a trailing edge 56, a distal edge (an inboard or inner diameter (ID) edge in the FIG. 2 heat exchanger) 58, a proximal edge (an outboard or outer diameter (OD) edge in the FIG. 2 heat exchanger) 60, a first lateral (circumferential (generally circumferentially facing) in the FIG. 2 heat exchanger) face 62 (FIG. 3) and a second lateral face 64.

As is discussed further below, the exemplary plates are essentially cantilevered from the manifold (lacking rigid coupling to static structure at the distal edges such as by having the distal edges free or not sufficiently rigidly coupled) and are thus subject to vibratory stimulus and resonance. To increase stiffness to combat resonance (e.g., by raising the natural frequency), the faces 62 and 64 converge from the proximal edge 60 (the outer diameter edge in the illustrated orientation) toward the distal edge 58 (the ID edge in this example).

As is discussed below, one or both faces 62, 64 bear fin arrays 70. The fins are separately formed (e.g., of folded sheetmetal - e.g., nickel-based superalloy) and secured (e.g., brazing, welding, diffusion bonding, and the like) to adjacent substrate(s) (generally see the '740 patent). As is discussed further below, exemplary fins are initially formed as square wave corrugations 72 (FIG. 3) of even height/amplitude whose troughs 73 or peaks 74 are secured to the associated face 62, 64. The corrugation 72 has legs 75, 76 and extends from a first sectional end 77 (an outer diameter (OD) end in the example) to a second sectional end 78 (an inner diameter (ID) end in the example). Along the direction of the individual corrugations 72 (streamwise of the ultimate second flow 912) the corrugation 72 has a first end near the plate substrate upstream edge and a second end near the plate substrate downstream edge. In general, the term "plate" or "panel" may be applied at any of several levels of detail. It may identify a body or substrate of an assembly or the greater assembly or subassembly (e.g., a cast substrate plus one or more separately-attached fin arrays).

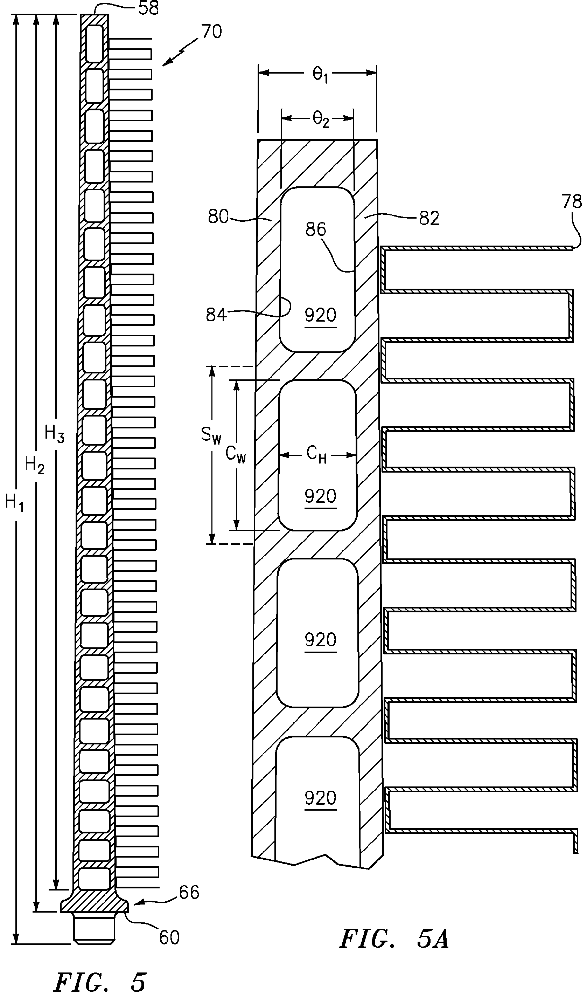

FIG. 5 shows the plate having an overall radial height H₁ and an exposed height H₂ (which ignores the height of any inlet or outlet fitting portion embedded/received in the manifold). Additionally, at the proximal edge 60, the plate has a flange 66. A height above the flange is H₃. Along a majority of these heights, the faces 62, 64 converge toward each other from the proximal edge 60 to the distal edge 58. An exemplary convergence angle θ₁ is between 0.10° and 8.0°, more particularly, 0.25° and 5.0° or 0.25° and 2.0° or 0.50° and 2.0°. For plates mounted on a concave circular section surface θ₁ may be exactly equal to the circumferential angular on-center pitch of the plates, or within a very small margin such as 0.05°, to provide effective parallelism of adjacent plates. Depending on the diameter of the annulus being filled and the desired linear pitch, this angle can vary widely. That is, it may be more a result of geometry constraints than of tuning requirements. In exemplary embodiments, the angle θ₁ may be in such range over a large fraction of one or more of such heights H₁, H₂, and H₃ (e.g., at least 40% or at least 50% or at least 60% or at least 70% or at least 80% or at least 90%). θ₁ may be uniform along such range (e.g. an embodiment with a higher angle proximal portion being discussed below).

The interior passageways also generally converge in the proximal-to-distal direction. FIG. 5 shows such convergence at an angle θ₂. **In** the FIG. 5 embodiment, θ₂ is equal to θ₁ so that sidewalls 80, 82 are effectively of uniform thickness. Respective sidewalls 80, 82 have inner surfaces 84 and 86. Exemplary θ₁ and θ₂ are 1.0°, more broadly 0.5° to 3.5° or 0.5° to 2.5°). FIG. 5A also identifies the cross-sectional width Cw and the cross-sectional height C_{H} of the passage leg 920. These features are further discussed below.

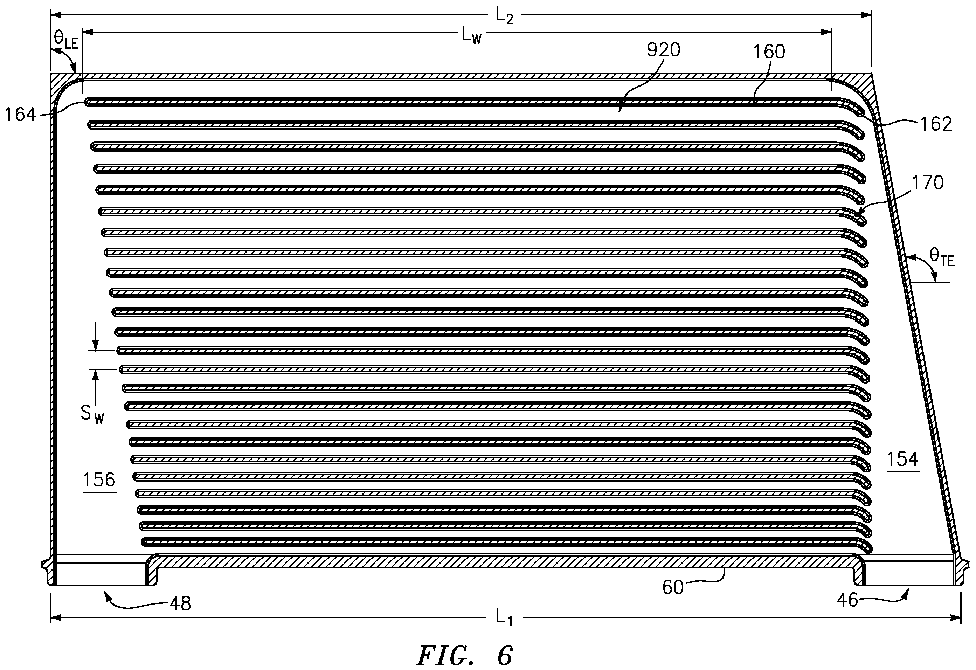

FIG. 6 shows each plate having an interior providing an associated flowpath branch/leg 920 from the inlet 46 of the plate to the outlet 48. The exemplary inlets and outlets are along the proximal edge 60 (e.g., on plugs protruding from a flat main portion of the proximal edge and received in the respective manifold ports). The inlet 46 feeds an inlet plenum 154 adjacent/along the trailing edge while the outlet 48 is fed by a plenum 156 along the leading edge.

A generally radial array of passageway/flowpath legs (sublegs) 920 extend between the inlet plenum 154 and outlet plenum 156. The adjacent flowpath legs 920 are separated from each other by wall structures 160. Each wall structure 160 extends from a leading end 162 to a trailing end 164 (along the first flowpath 900). The exemplary wall structures 160 are straight with the exception of guide turns 170 extending a short distance from the leading edge 162 to guide air from a generally radially outward flow within the plenum 154 and shift that air generally axially. Although the outlet plenum 156 may have similar turns, modeling shows these to be less advantageous at the outlet plenum 156. The wall structures 160 span between adjacent interior faces 84, 86 (FIG. 5A).

The wall structures 160 may divide internal flows into smaller passages, thereby increasing surface area, more equally distributing, and/or accelerating internal flows. They may also tie the walls 80, 82 of the plate together to prevent ballooning under elevated temperatures and pressures.

The exemplary inlet plenum 154 converges in axial dimension from proximal to distal or downstream along the first flowpath 900. Similarly, the exemplary outlet plenum 156 diverges in axial dimension from distal to proximal or downstream along the first flowpath 900 toward the outlet 48. Such respective convergence and divergence may reduce internal losses and prevents separation of flow.

FIG. 6 also shows several other geometric considerations. Wall 160 straight portion length Lw and on-center spacing Sw are shown. An angle θ_{LE} of the leading edge relative to the downstream direction and an angle θ_{TE} of the trailing edge relative to the downstream direction are shown. Plate root length L₁ and plate tip length L₂ are shown.

The interior of the plate may optionally include integral surface enhancement features (not shown - *see* the '091 application).

A uniform pitch or spacing Sw of adjacent passages 920 will result in uniform surface areas for heat transfer (assuming uniform width dividing walls 160). However, this will cause larger flow areas near the proximal edge 60 (counter-productive for flow distribution as discussed in the '091 application). More desirable is something closer to a uniform flow area through adjacent passages. This will result in a smaller spacing Sw near the proximal edge 60 relative to the larger spacing Sw at the distal edge (e.g., a continuous progressive increase). Relative to a uniform spacing, this further raises the natural frequency of the plate by stiffening the proximal portion of the plate and/or lightening the distal portion of the plate.

One aspect of the convergence of the faces 62 and 64 is that the angle θ₁ may be chosen, in view of the radius of curvature of the inner diameter surface of the manifold structure and circumferential on-center spacing of the plates so that each face 62 is parallel to the adjacent face 64 of the next adjacent plate (if any) and vice versa. This parallelism allows the constant amplitude wave fin structure to be used to span the gap between adjacent plate substrates with peaks secured to one substrate and troughs secured to the other.

When parallelism is not a consideration, other angle variations are possible such as having a continuously varying angle (e.g., a slight concavity in the faces 62, 64). Additionally, other fin structures may be included including free-ended fins cut from such wave form stock. For example, a configuration with wire electrodischarge machined (EDM) fins is shown in copending US Patent Application No. 62963068 (the '068 application), filed January 19, 2020, and entitled "Aircraft Heat Exchanger Finned Plate Manufacture", the disclosure of which is incorporated by reference herein in its entirety as if set forth at length.

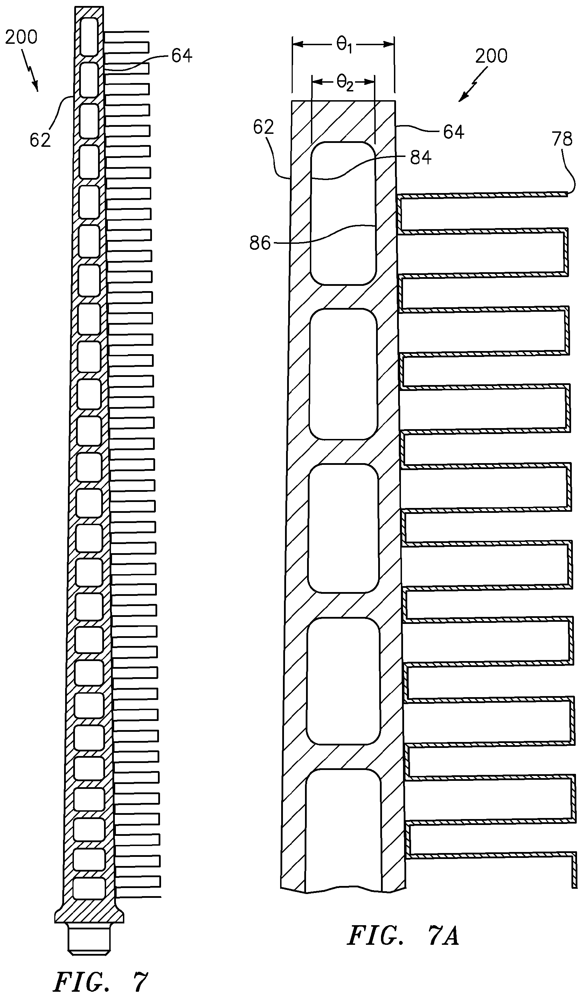

FIG. 7 shows a further plate 200 otherwise similar to the plate 44 except that the interior faces 84 and 86 taper somewhat less than the taper of the faces 62 and 64 (θ₁ > θ₂) (exemplary θ₁ 1.5° and θ₂ 1.0°) so that the wall thickness generally decreases in the proximal-to-distal direction. Otherwise, θ₁ and other considerations may be similar to that of the plate 44. Exemplary θ₁ is at least 0.25° greater than θ₂, more generally 0.25° to 3.0° or 0.30° to 1.5° with an example of 0.50°. This also highlights that, even where θ₁ is constant, adjacent θ₂ need not be.

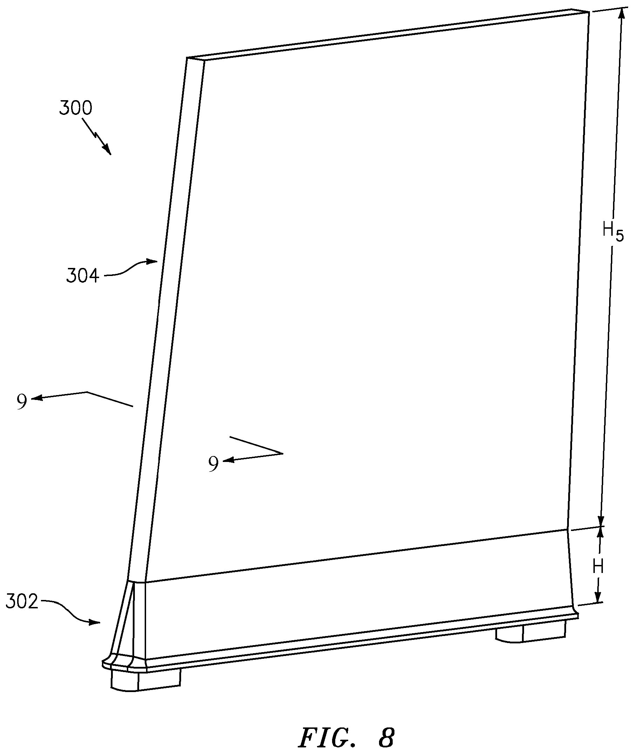

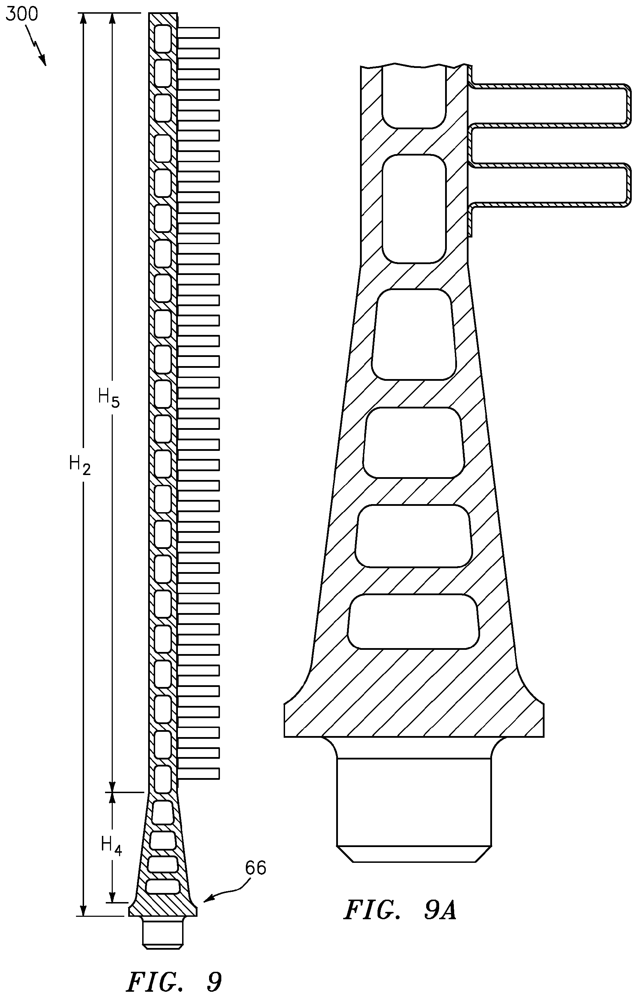

FIGs. 8 and 9 show an alternate configuration of a plate 300 in which a base/proximal portion 302 (height H₄ measured from the distal end of the flange 66) of the substrate rapidly tapers but transitions to a distal portion 304 (height H₅) that is less tapering. Exemplary H₄ is 5.0% to 50.0% of H₂ (but the upper end of that range could go to 100%), more particularly 8.0% to 20.0% or 10.0% to 15.0%.. Along that proximal portion 302, exemplary θ₁ is 1.0° to 30.0°, more particularly, 5.0° to 20.0° or 10.0° to 18.0°. In the exemplary embodiment, the distal portion 304 does not taper at all. Alternative distal portions 304 may taper in similar fashion to the embodiments above.

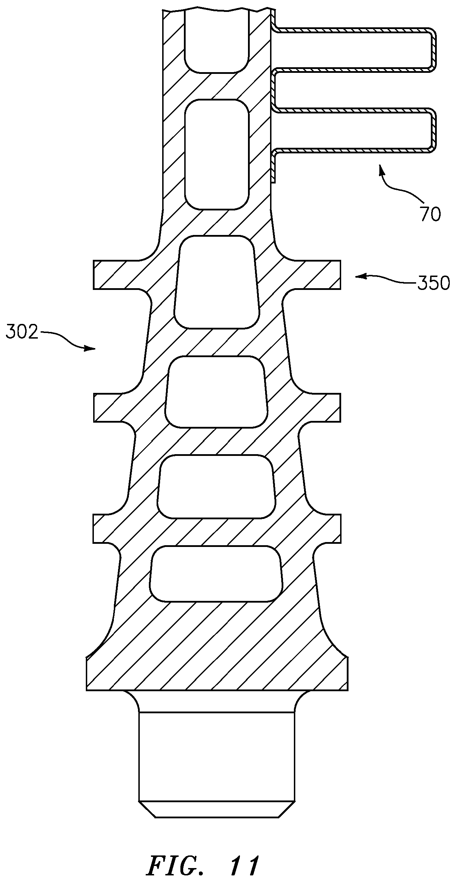

A particular situation wherein such plates 300 may be particularly useful is with a flat manifold wherein the adjacent faces of two plates along the distal portion 304 are parallel and may feature a wave-form fin structure joining the two as discussed above. The proximal portion 302 may still provide stiffness/resonance benefits. FIG. 11 is another example of one such situation. Because the fins do not extend to the proximal sections, the proximal sections themselves may bear integral fins 350 and may bear chevron or other trip strips (not shown).

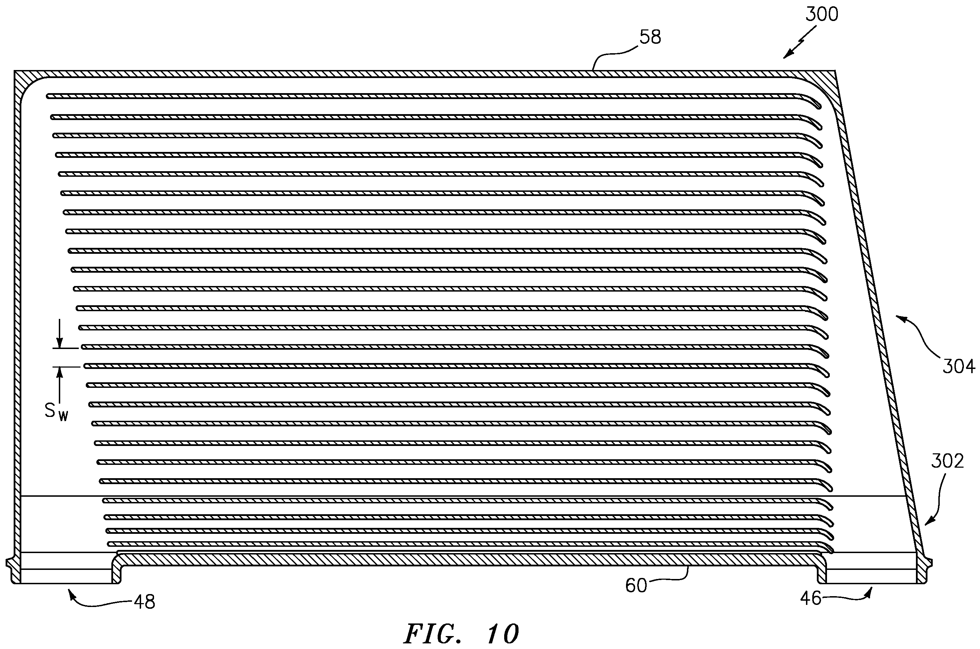

In the FIG. 10 example, of interior passages, passage cross-sectional areas are the same as each other due to a progressive net 40% reduction in spacing Sw from the fifth passage (standard size shared with remaining passages distally thereof) to the first passage (smallest - near the proximal edge). The same stiffening benefit discussed above applies.

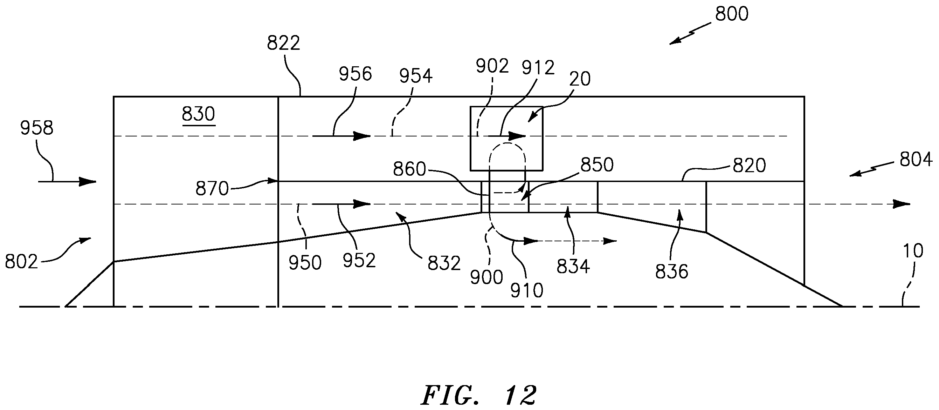

FIG. 12 schematically shows a gas turbine engine 800 as a turbofan engine having a centerline or central longitudinal axis 10 and extending from an upstream end at an inlet 802 to a downstream end at an outlet 804. The exemplary engine 800 schematically includes a core flowpath 950 passing a core flow 952 and a bypass flowpath 954 passing a bypass flow 956. The core flow 952 and bypass flow 956 are initially formed by respective portions of a combined inlet airflow 958 divided at a splitter 870.

A core case or other structure 820 divides the core flowpath 950 from the bypass flowpath 954. The bypass flowpath 954 is, in turn, surrounded by an outer case 822 which, depending upon implementation, may be a fan case. From upstream to downstream, the engine includes a fan section 830 having one or more fan blade stages, a compressor 832 having one or more sections each having one or more blade stages, a combustor 834 (e.g., annular, can-type, or reverse flow), and a turbine 836 again having one or more sections each having one or more blade stages. For example, many so-called two-spool engines have two compressor sections and two turbine sections with each turbine section driving a respective associated compressor section and a lower pressure downstream turbine section also driving the fan (optionally via a gear reduction). Yet other arrangements are possible.

FIG. 12 shows the heat exchanger 20 positioned in the bypass flowpath so that a portion of the bypass flowpath 954 becomes the second flowpath 902 and a portion of the bypass flow 956 becomes the second airflow 912.

The exemplary first airflow 910 is drawn as a compressed bleed flow from a diffuser case 850 between the compressor 832 and combustor 834 and returned radially inwardly back through the core flowpath 950 via struts 860. Thus, the flowpath 900 is a bleed flowpath branching from the core flowpath 950.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. A plate (44) of a heat exchanger (20) of a gas turbine engine (800) and for providing heat transfer between a first flow (910) along a first flowpath (900) and a second flow (912) along a second flowpath (902), the heat exchanger plate (44) comprising a body (52) having:
a first face (62) and a second face (64) opposite the first face (62);
a leading edge (54) along the second flowpath (902) and a trailing edge (56) along the second flowpath (902);
a proximal edge (60); and
at least one passageway along the first flowpath (900),
wherein:
the proximal edge (60) comprises at least one inlet port (46) along the first flowpath (900) and at least one outlet port (48) along the first flowpath (900);
the plate (44) is cantilevered from its proximal edge (60); and
along at least 8.0% of a height (H₂) between the proximal edge (60) and the distal edge (58), the first face (62) and the second face (64) converge at a first angle of at least 0.25°,
**characterized in that**:
at least one of the first face (62) and second face (64) bears a fin array formed as a square wave corrugation (72) of uniform wave amplitude whose troughs (73) or peaks (74) are secured to the associated face (62, 64), wherein the fin array extends in a direction from the proximal edge (60) to the distal edge (58).

2. The plate (44) of claim 1 wherein:
said at least 8.0% of a height (H₂) between the proximal edge (60) and the distal edge (58) is a continuous zone and the first angle is uniform along said continuous zone.

3. The plate (44) of claim 1 or 2 wherein:
the plate (44) has a plurality of interior walls (160) separating legs (920) of the at least one passageway at a progressively increasing spacing from proximal to distal.

4. The plate (44) of claim 1, 2, or 3 wherein:
along at least 50% of a height (H₂) between the proximal edge (60) and the distal edge (58), the first face (62) and the second face (64) converge at a first angle of between 0.25° and 5.0°.

5. The plate (44) of any preceding claim wherein the passageway comprises:
an inlet plenum (154) extending from the at least one inlet port (46) of the plate;
an outlet plenum (156) extending to the at least one outlet port (48) of the plate; and
a plurality of legs (920) in parallel between the inlet plenum (154) and the outlet plenum (156).

6. The plate (44) of claim 5, wherein:
the inlet plenum (154) is adjacent the trailing edge (56); and
the outlet plenum (156) is adjacent the leading edge (54).

7. A heat exchanger (20) for providing heat transfer between a first flow (910) along a first flowpath (900) and a second flow (912) along an arcuate second flowpath (902), the heat exchanger (20) comprising:
an inlet manifold (26) having at least one inlet port (22) and at least one outlet port (24);
an outlet manifold (28) having at least one outlet port (24) and at least one inlet port (22); and
at least one plate bank (40) comprising:
a plurality of plates (44) according to any preceding claim, each plate (44) comprising a body (52) mounted to the inlet manifold (26) and the outlet manifold (28); and
wherein the fin arrays (70) span between the first face (62) of one said plate (44) and the second face (64) of an adjacent said plate (44).

8. The heat exchanger (20) of claim 7 wherein, for each plate (44) of the plurality of plates (44):
the at least one inlet port (46) and at least one outlet port (48) are along one of the inner diameter edge (58) and the outer diameter edge (60).

9. The heat exchanger (20) of claim 7 or 8 wherein, for each plate (44) of the plurality of plates (44):
the inlet manifold (26) and outlet manifold (28) are portions of a combined manifold structure (29).

10. The heat exchanger (20) of claim 9, wherein:
the combined manifold structure (29) is arcuate having a concave inner diameter face, the plates (44) mounted to the inner diameter face.

11. A gas turbine engine (800) including the heat exchanger (20) of claim 7, 8, 9, or 10 and further comprising:
a bypass flowpath (954) forming the second flowpath (902).

12. A method for using the heat exchanger (20) of claim 7, 8, 9, or 10 the method comprising:
passing the first flow (910) along the first flowpath (900); and
passing the second flow (912) along the second flowpath (902) to transfer said heat from the first flow (910) to the second flow (912).

13. The method of claim 12, wherein:
the second flow (912) passes along the plate first faces (62) and plate second faces (64).

## Patentansprüche

1. Platte (44) eines Wärmetauschers (20) eines Gasturbinentriebwerks (800) und zum Bereitstellen von Wärmeübertragung zwischen einem ersten Strom (910) entlang eines ersten Strömungspfads (900) und einem zweiten Strom (912) entlang eines zweiten Strömungspfads (902), wobei die Wärmetauscherplatte (44) einen Körper (52) umfasst, der aufweist:
eine erste Fläche (62) und eine zweite Fläche (64) gegenüber der ersten Fläche (62);
eine Vorderkante (54) entlang des zweiten Strömungspfads (902) und eine Hinterkante (56) entlang des zweiten Strömungspfads (902);
eine proximale Kante (60); und
mindestens einen Durchgang entlang des ersten Strömungspfads (900),
wobei:
die proximale Kante (60) mindestens eine Einlassöffnung (46) entlang des ersten Strömungspfads (900) und mindestens eine Auslassöffnung (48) entlang des ersten Strömungspfads (900) umfasst;
die Platte (44) von ihrer proximalen Kante (60) auskragt; und
entlang mindestens 8,0 % einer Höhe (H₂) zwischen der proximalen Kante (60) und der distalen Kante (58) die erste Fläche (62) und die zweite Fläche (64) in einem ersten Winkel von mindestens 0,25° konvergieren,
**dadurch gekennzeichnet, dass**:
mindestens eine der ersten Fläche (62) und der zweiten Fläche (64) eine Rippenanordnung trägt, die als Rechteckwellung (72) mit gleichmäßiger Wellenamplitude ausgebildet ist, deren Täler (73) oder Spitzen (74) an der zugehörigen Fläche (62, 64) befestigt sind, wobei sich die Rippenanordnung in einer Richtung von der proximalen Kante (60) zu der distalen Kante (58) erstreckt.

2. Platte (44) nach Anspruch 1, wobei:
die mindestens 8,0 % einer Höhe (H₂) zwischen der proximalen Kante (60) und der distalen Kante (58) eine durchgehende Zone sind und der erste Winkel entlang der durchgehenden Zone gleichmäßig ist.

3. Platte (44) nach Anspruch 1 oder 2, wobei:
die Platte (44) eine Vielzahl von Innenwänden (160) aufweist, die Schenkel (920) des mindestens einen Durchgangs in einem von proximal nach distal fortschreitend zunehmenden Abstand trennen.

4. Platte (44) nach Anspruch 1, 2 oder 3, wobei:
entlang mindestens 50 % einer Höhe (H₂) zwischen der proximalen Kante (60) und der distalen Kante (58) die erste Fläche (62) und die zweite Fläche (64) in einem ersten Winkel von zwischen 0,25° und 5,0° konvergieren.

5. Platte (44) nach einem der vorhergehenden Ansprüche, wobei der Durchgang umfasst:
ein Einlassplenum (154), das sich von der mindestens einen Einlassöffnung (46) der Platte erstreckt;
ein Auslassplenum (156), das sich zu der mindestens einen Auslassöffnung (48) der Platte erstreckt; und
eine Vielzahl von Schenkeln (920) parallel zwischen dem Einlassplenum (154) und dem Auslassplenum (156).

6. Platte (44) nach Anspruch 5, wobei:
das Einlassplenum (154) benachbart zu der Hinterkante (56) ist; und
das Auslassplenum (156) benachbart zu der Vorderkante (54) ist.

7. Wärmetauscher (20) zum Bereitstellen von Wärmeübertragung zwischen einem ersten Strom (910) entlang eines ersten Strömungspfads (900) und einem zweiten Strom (912) entlang eines bogenförmigen zweiten Strömungspfads (902), wobei der Wärmetauscher (20) umfasst:
einen Einlassverteiler (26) mit mindestens einer Einlassöffnung (22) und mindestens einer Auslassöffnung (24);
einen Auslasssammler (28) mit mindestens einer Auslassöffnung (24) und mindestens einer Einlassöffnung (22); und
mindestens eine Plattenbank (40), umfassend:
eine Vielzahl von Platten (44) nach einem der vorhergehenden Ansprüche, wobei jede Platte (44) einen Körper (52) umfasst, der an dem Einlassverteiler (26) und dem Auslasssammler (28) montiert ist; und
wobei die Rippenanordnungen (70) sich zwischen der ersten Fläche (62) einer Platte (44) und der zweiten Fläche (64) einer benachbarten Platte (44) erstrecken.

8. Wärmetauscher (20) nach Anspruch 7, wobei für jede Platte (44) der Vielzahl von Platten (44):
die mindestens eine Einlassöffnung (46) und mindestens eine Auslassöffnung (48) entlang einer von der Innendurchmesserkante (58) und der Außendurchmesserkante (60) liegen.

9. Wärmetauscher (20) nach Anspruch 7 oder 8, wobei für jede Platte (44) der Vielzahl von Platten (44):
der Einlassverteiler (26) und der Auslasssammler (28) Teile einer kombinierten Verteilerstruktur (29) sind.

10. Wärmetauscher (20) nach Anspruch 9, wobei:
die kombinierte Verteilerstruktur (29) bogenförmig mit einer konkaven Innendurchmesserfläche ist, wobei die Platten (44) an der Innendurchmesserfläche montiert sind.

11. Gasturbinentriebwerk (800), das den Wärmetauscher (20) nach Anspruch 7, 8, 9 oder 10 einschließt und ferner umfasst:
einen Bypass-Strömungspfad (954), der den zweiten Strömungspfad (902) bildet.

12. Verfahren zur Verwendung des Wärmetauschers (20) nach Anspruch 7, 8, 9 oder 10, wobei das Verfahren umfasst:
Leiten des ersten Stroms (910) entlang des ersten Strömungspfads (900); und
Leiten des zweiten Stroms (912) entlang des zweiten Strömungspfads (902), um die Wärme von dem ersten Strom (910) auf den zweiten Strom (912) zu übertragen.

13. Verfahren nach Anspruch 12, wobei:
der zweite Strom (912) an den ersten Plattenflächen (62) und den zweiten Plattenflächen (64) entlang strömt.

## Revendications

1. Plaque (44) d'un échangeur de chaleur (20) d'un moteur à turbine à gaz (800) destinée à assurer le transfert de chaleur entre un premier flux (910) le long d'un premier trajet d'écoulement (900) et un second flux (912) le long d'un second trajet d'écoulement (902), la plaque d'échangeur de chaleur (44) comprenant un corps (52) ayant :
une première face (62) et une seconde face (64) opposée à la première face (62) ;
un bord avant (54) le long du second trajet d'écoulement (902) et un bord arrière (56) le long du second trajet d'écoulement (902) ;
un bord proximal (60) ; et
au moins un passage le long du premier trajet d'écoulement (900),
dans laquelle :
le bord proximal (60) comprend au moins un orifice d'entrée (46) le long du premier trajet d'écoulement (900) et au moins un orifice de sortie (48) le long du premier trajet d'écoulement (900) ;
la plaque (44) est en porte-à-faux par rapport à son bord proximal (60) ; et
sur au moins 8,0 % d'une hauteur (H₂) entre le bord proximal (60) et le bord distal (58), la première face (62) et la seconde face (64) convergent à un premier angle d'au moins 0,25°,
**caractérisée en ce que** :
au moins l'une de la première face (62) et de la seconde face (64) porte un réseau d'ailettes sous la forme d'une ondulation carrée (72) d'amplitude d'onde uniforme dont les creux (73) ou les sommets (74) sont fixés à la face (62, 64) associée, le réseau d'ailettes s'étendant dans une direction du bord proximal (60) au bord distal (58).

2. Plaque (44) selon la revendication 1, dans laquelle :
lesdits au moins 8,0 % d'une hauteur (H₂) entre le bord proximal (60) et le bord distal (58) sont une zone continue et le premier angle est uniforme le long de ladite zone continue.

3. Plaque (44) selon la revendication 1 ou 2, dans laquelle :
la plaque (44) présente une pluralité de parois intérieures (160) séparant les tiges (920) de l'au moins un passage selon un espacement progressivement croissant de proximal à distal.

4. Plaque (44) selon la revendication 1, 2 ou 3, dans laquelle :
sur au moins 50 % d'une hauteur (H₂) entre le bord proximal (60) et le bord distal (58), la première face (62) et la seconde face (64) convergent à un premier angle entre 0,25° et 5,0°.

5. Plaque (44) selon une quelconque revendication précédente, dans laquelle le passage comprend :
un plénum d'entrée (154) s'étendant à partir de l'au moins un orifice d'entrée (46) de la plaque ;
un plénum de sortie (156) s'étendant vers l'au moins un orifice de sortie (48) de la plaque ; et
une pluralité de tiges (920) parallèles entre le plénum d'entrée (154) et le plénum de sortie (156).

6. Plaque (44) selon la revendication 5, dans laquelle :
le plénum d'entrée (154) est adjacent au bord arrière (56) ; et
le plénum de sortie (156) est adjacent au bord avant (54).

7. Échangeur de chaleur (20) destiné à assurer le transfert de chaleur entre un premier flux (910) le long d'un premier trajet d'écoulement (900) et un second flux (912) le long d'un second trajet d'écoulement incurvé (902), l'échangeur de chaleur (20) comprenant :
un collecteur d'admission (26) présentant au moins un orifice d'entrée (22) et au moins un orifice de sortie (24) ;
un collecteur d'échappement (28) présentant au moins un orifice de sortie (24) et au moins un orifice d'entrée (22) ; et
au moins un banc de plaques (40) comprenant :
une pluralité de plaques (44) selon une quelconque revendication précédente, chaque plaque (44) comprenant un corps (52) monté sur le collecteur d'admission (26) et le collecteur d'échappement (28) ; et
dans lequel les réseaux d'ailettes (70) s'étendent entre la première face (62) de l'une desdites plaques (44) et la seconde face (64) d'une plaque adjacente desdites plaques (44).

8. Échangeur de chaleur (20) selon la revendication 7, dans lequel, pour chaque plaque (44) de la pluralité de plaques (44) :
au moins un orifice d'entrée (46) et au moins un orifice de sortie (48) sont situés le long de l'un du bord de diamètre intérieur (58) et du bord de diamètre extérieur (60).

9. Échangeur de chaleur (20) selon la revendication 7 ou 8, dans lequel, pour chaque plaque (44) de la pluralité de plaques (44) :
le collecteur d'admission (26) et le collecteur d'échappement (28) sont des parties d'une structure de collecteur combinée (29).

10. Échangeur de chaleur (20) selon la revendication 9, dans lequel :
la structure de collecteur combinée (29) est incurvée, avec une face de diamètre intérieur concave, les plaques (44) étant montées sur la face de diamètre intérieur.

11. Moteur à turbine à gaz (800) comportant l'échangeur de chaleur (20) selon la revendication 7, 8, 9 ou 10 et comprenant en outre :
un trajet d'écoulement de dérivation (954) formant le second trajet d'écoulement (902).

12. Procédé d'utilisation de l'échangeur de chaleur (20) selon la revendication 7, 8, 9 ou 10, le procédé comprenant :
le passage du premier flux (910) le long du premier trajet d'écoulement (900) ; et
le passage du second flux (912) le long du second trajet d'écoulement (902) pour transférer ladite chaleur du premier flux (910) au second flux (912).

13. Procédé selon la revendication 12, dans lequel :
le second flux (912) passe le long des premières faces de plaque (62) et des secondes faces de plaque (64).
